# FASCICULE DE BREVET EUROPEEN

(11) **EP 0 662 595 B1**
(45) Date de publication et mention de la délivrance du brevet: **24.09.1997**
(21) Numéro de dépôt: 94402998.2
(22) Date de dépôt: 22.12.1994
(51) Int. Cl.: F25J 3/08, B01D 15/00

(54) **Procédé et dispositif pour la préparation d'azote liquide de haute pureté**
Verfahren und Vorrichtung zur Herstellung von flüssigem Stickstoff mit hoher Reinheit
Process and apparatus for the preparation of high purity liquid nitrogen

(30) Priorité: 31.12.1993 FR 9315958
(43) Date de publication de la demande: 12.07.1995
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Gary, Daniel, F-78180 Montigny Le Bretonneux (FR)

(56) Documents cités:
- DE-A- 1 936 049
- US-A- 4 746 332
- PATENT ABSTRACTS OF JAPAN vol. 017 no. 410 (M-1455) & JP-A-05 079754 (HITACHI) 30 Mars 1993,
- DATABASE WPI Week 1190 Derwent Publications Ltd., London, GB; AN 90-078652 & JP-A-02 030 607 (KOBE STEEL) , 1 Février 1990
- "Ullmanns Encyklopädie der technischen Chemie", Verlag Chemie, Band 2, Weinheim/Bergstrasse

## Description

La présente invention concerne un procédé pour la préparation d'azote liquide de haute pureté, substantiellement exempt de l'une au moins des impuretés hydrogène, monoxyde de carbone et oxygène, ainsi qu'un dispositif pour la mise en oeuvre de ce procédé.

L'azote liquide ou gazeux est classiquement préparé par distillation cryogénique de l'air, réalisée dans une boîte froide comprenant une ou plusieurs colonnes de distillation.

L'azote ainsi obtenu présente une pureté suffisante pour la plupart de ses applications.

Cependant, certains secteurs d'activité comme l'industrie électronique, notamment pour la fabrication de semi-conducteurs ou d'autres composants, l'industrie pharmaceutique, l'analyse ou la recherche, requiert de l'azote de plus haute pureté.

Selon l'application concernée, l'azote doit, en particulier, être substantiellement exempt de l'une au moins des impuretés hydrogène, oxygène et monoxyde de carbone.

Des teneurs maximales en ces impuretés de l'ordre de quelques ppb (parties par milliards en volume) sont alors requises.

Classiquement, les impuretés hydrogène et monoxyde de carbone sont éliminées de l'air à distiller ou de l'azote gazeux résultant de la distillation cryogénique. Pour ce faire, on a déjà proposé des procédés d'épuration selon lesquels on peut faire réagir les dites impuretés avec une quantité d'oxygène suffisante en présence d'un catalyseur, pour former de l'eau et du dioxyde de carbone, éliminés ultérieurement, par exemple par adsorption. Des procédés de ce type sont par exemple décrits dans le brevet US 4.869.883 et dans les demandes de brevet EP-A-454.531 et FR-A-2.690.357.

Il a également été proposé d'éliminer l'oxygène ou le monoxyde de carbone d'azote gazeux froid par adsorption. Un tel procédé est par exemple décrit dans le brevet US-A-4.746.332.

La demande de brevet JP-A-05/079754 décrit un procédé pour éliminer les impuretés dioxyde de carbone, eau et monoxyde de carbone, contenu dans de l'azote liquide. Selon ce procédé, de l'azote liquide est soutiré d'une colonne de distillation d'air, envoyé dans une colonne d'absorption remplie de zéolite A en vue de l'absorption des impuretés, puis est renvoyé dans la colonne de distillation. Un procédé d'élimination du monoxyde de carbone dans de l'azote liquide par adsorption au moyen d'une zéolite est également décrite dans le brevet US-A-5,333,463, publié le 02/04/94.

Il apparaît que les procédés de préparation d'azote de haute pureté sont tous, à la connaissance de la demanderesse, effectués sur un gaz, habituellement de l'air ou de l'azote à purifier. En raison des volumes importants de gaz à traiter, les dispositifs nécessaires à la mise en oeuvre de ces procédés sont généralement de taille importante, en particulier quand ledit gaz consiste en l'air.

Par ailleurs, en vue de diminuer les coûts et les investissements, il est courant de stocker et de transporter l'azote à l'état liquide. Si l'on souhaite préparer de l'azote liquide de haute pureté, il est nécessaire alors, dans un premier temps, de purifier de l'air à distiller ou de l'azote gazeux, puis dans un second temps, de liquéfier l'azote gazeux purifié.

Cependant, le passage de l'état gazeux à l'état liquide comporte des étapes au cours desquelles l'azote peut être accidentellement recontaminé par des impuretés, principalement l'oxygène, et parfois le monoxyde de carbone et/ou l'hydrogène. De plus, même lorsque la liquéfaction est réalisée avec grand soin, l'azote liquide quand il est transféré de son site de stockage ou de transport à un autre site de ce type, peut encore être recontaminé par lesdites impuretés.

En outre, une purification effectuée sur un gaz entraîne une perte de charge élevée. Il conviendrait donc d'effectuer cette purification directement sur l'azote liquide pour obvier à cette perte de charge.

La présente invention a pour premier objet, un procédé permettant de traiter directement de l'azote liquide, en vue de le purifier.

Un second objet de l'invention consiste en un procédé de purification d'azote liquide ne nécessitant pas la mise en oeuvre d'un dispositif onéreux et de grande dimension.

Un troisième objet de l'invention consiste en un procédé de purification d'azote liquide pouvant être réalisé en tout site de stockage ou de transport de l'azote liquide.

Un quatrième objet de l'invention consiste en un dispositif pour la préparation d'azote liquide de haute pureté.

L'invention consiste alors en un procédé de préparation d'azote liquide de haute pureté, substantiellement exempt en l'une au moins des impuretés hydrogène, monoxyde de carbone et oxygène comportant la mise en contact de l'azote liquide à purifier avec un adsorbant permettant l'adsorption de l'une au moins desdites impuretés, pour la mise en oeuvre d'au moins une étape d'adsorption choisie dans le groupe formé par:
- une étape d'adsorption de l'impureté CO sur un adsorbant choisi dans le groupe formé par les zéolites naturelles échangées ou synthétiques échangées, et les oxydes métalliques poreux;
- une étape d'adsorption de l'impureté O₂ sur un adsorbant choisi dans le groupe formé par les zéolites naturelles ou synthétiques, et les oxydes métalliques poreux;
- une étape d'adsorption de l'impureté H2 sur un adsorbant choisi dans le groupe formé par les zéolites naturelles ou synthétiques;
et la récupération de l'azote liquide ainsi purifié;
un procédé selon lequel l'impureté est le monoxyde de carbone et l'adsorbant une zéolite non échangée, étant exclus.

Il a en effet été constaté que l'adsorption du monoxyde de carbone contenu dans de l'azote liquide, par une zéolite non échangée, ne permettait qu'une élimination partielle de cette impureté. L'azote liquide ainsi préparé ne peut convenir, notamment, dans les applications du domaine de l'électronique.

L'invention est à présent décrite plus en détail, en référence aux figures en annexe.
- la figure 1 représente un dispositif pour l'élimination des impuretés présentes dans de l'azote liquide contenu dans une cuve de stockage.
- la figure 2 représente un dispositif pour l'élimination des impuretés contenues dans de l'azote liquide, au niveau d'une borne de dépotage.
- la figure 3 représente un dispositif pour l'élimination des impuretés contenues dans de l'azote liquide, ledit dispositif comportant deux réacteurs d'adsorption montés en parallèles.
- la figure 4 représente une cuve de stockage d'azote liquide pourvue d'un moyen de purification de l'azote liquide, reliée à une cuve pour le transport de cet azote.
- la figure 5 représente une boîte froide pour la séparation des gaz de l'air reliée à un moyen d'épuration de l'azote liquide.
- la figure 6 représente une unité de séparation des gaz de l'air fonctionnant avec un biberonnage d'azote liquide de haute pureté.
- la figure 7 représente un dispositif pour l'élimination des impuretés monoxyde de carbone et oxygène par adsorption, associé à une colonne de distillation pour l'élimination de l'hydrogène.

Un adsorbant convenant à la mise en oeuvre du procédé selon l'invention peut être choisi dans le groupe constitué par les zéolites naturelles et synthétiques et les oxydes métalliques poreux. Avantageusement, la zéolite naturelle est une mordénite et la zéolite synthétique est du type A, X ou Y.

Ces zéolites sont bien connues et sont par exemple décrites dans le brevet US 2.882.244 ou dans le brevet US 3.140.933. Dans le cadre de la présente invention, les zéolites 4A, 5A et 10X sont préférées.

Ces zéolites peuvent être utilisées pour adsorber l'oxygène, ou de préférence, l'hydrogène. Cependant, comme indiqué ci-dessus, elles ne conviennent pas pour l'adsorption du monoxyde de carbone.

Selon un aspect avantageux de l'invention, l'adsorbant, essentiellement lorsqu'il consiste en une zéolite, peut être échangé par au moins un ion métallique. L'échange d'ions peut être réalisé de manière classique. L'échange a pour but de substituer en tout ou en partie des cations constitutifs de la zéolite naturelle ou synthétique, par un ou plusieurs autres cations choisis. Des zéolites ainsi échangées conviennent alors pour l'adsorption desdites impuretés, y compris le monoxyde de carbone.

L'ion métallique peut être l'ion d'un métal choisi dans le groupe constitué par le lithium, un métal alcalino-terreux tel le calcium, le baryum ou le strontium, un métal de transition tel le zinc, le fer, ou de préférence, le cuivre ou l'argent. L'ion cuivrique est plus particulièrement préféré. Le degré d'échange peut varier en fonction de la nature de l'ion, mais avantageusement il est aussi élevé que possible. A titre d'exemples, si l'ion considéré est le lithium, le taux d'échange peut être supérieur à 80%, plus préférentiellement supérieur à 90 %. si l'ion considéré est l'ion cuivrique, le taux d'échange peut être supérieur à 90%, avantageusement de l'ordre de 100%. Pour atteindre un taux d'échange élevé, l'adsorbant peut être soumis à deux ou plusieurs opérations d'échange successives.

Les adsorbants particulièrement préférés dans le cadre de la présente invention, consiste en des oxydes métalliques poreux.

Par le terme oxyde métallique poreux, on entend aussi bien des oxydes d'un métal que des oxydes mixtes, comportant des oxydes de plusieurs métaux. Le silicium n'est pas ici considéré comme un métal. Ainsi, les zéolites, constituées de motifs SᵢO₂, ne sont pas des oxydes métalliques au sens de l'invention. A titre d'oxyde métallique, on peut notamment citer les oxydes des métaux de transition, en particulier ceux des colonnes IV B, V B, VI B, VIII et I B du Tableau périodique et dont le numéro atomique est compris entre 22 et 79. Parmi ces métaux, on préfère le cuivre, le nickel, le manganèse, l'argent et le fer, pris séparément ou sous la forme d'oxyde mixte.

Un oxyde métallique comprenant un oxyde mixte de cuivre et de manganèse et, le cas échéant, d'autres oxyde de métaux de transition, est tout particulièrement préféré. Avantageusement, de tels oxydes métalliques poreux sont des hopcalites. Une hopcalite convenant tout particulièrement pour la mise en oeuvre du procédé de l'invention est du type de celle commercialisée par la Société Prolabo France, comprenant un mélange d'oxyde de manganèse, d'oxyde cuivrique, d'oxyde cuivreux et du carbonate de manganèse.

Un adsorbant selon l'invention peut présenter des pores dont le diamètre moyen est supérieur à 0,4 nm, de préférence compris entre 0,5 et 1nm et dont le volume est supérieur à 0,1 cm³ /g, de préférence compris entre 0,15 et 0,5 cm³/g. La surface spécifique de l'adsorbant selon l'invention est généralement supérieure à 150 m ²/g, de préférence comprise entre 150 et 300 m² /g, lorsque l'adsorbant est une zéolite et entre 500 et 800 m ²/ g lorsque l'adsorbant est un oxyde métallique poreux.

L'adsorbant peut se présenter sous la forme d'une poudre ou de bâtonnets, ou , de préférence, sous forme de billes. Le diamètre de ces billes peut être compris entre 1 et 5mm.

L'azote liquide à purifier selon le procédé de l'invention peut comprendre moins de 5 ppm (partie par million en volume) en chacune desdites impuretés, plus généralement de 0,15 à 2 ppm en monoxyde de carbone et en oxygène et moins de 50 ppb d'hydrogène.

La teneur en chacune des impuretés peut notamment être fonction du procédé mis en oeuvre pour élaborer l'azote liquide à purifier.

L'azote liquide traitée selon le procédé de l'invention peut ne plus comprendre que des teneurs très faibles en chacune desdites impuretés. Ainsi, selon la nature et les caractéristiques de l'adsorbant mis en oeuvre, on a pu préparer de l'azote liquide de haute pureté, comprenant moins de 10 ppb d'hydrogène, moins de 20 ppb, voire moins de 5 ppb de monoxyde de carbone et/ou moins de 25, voire moins de 5 ppb d'oxygène. Il est à noter que certains adsorbants du type de ceux mentionnés ci-dessus sont plus sélectifs vis à vis d'une impureté que d'une autre. A cet égard, on peut noter que les oxydes métalliques, notamment les hopcalites, sont plus sélectifs vis à vis du monoxyde de carbone et de l'oxygène que de l'hydrogène. Dans ce cas, il peut être avantageux d'associer deux ou plusieurs adsorbants pour obtenir de l'azote liquide substantiellement exempt en chacune desdites impuretés.

D'autres procédés peuvent être mis en oeuvre pour éliminer la ou les impuretés non adsorbées par l'adsorbant. Ainsi, si l'impureté non adsorbée est l'hydrogène, on peut éliminer celui-ci de l'azote liquide par distillation, cela de manière classique.

Les divers adsorbants ainsi mis en oeuvre peuvent être disposés dans une même zone de traitement ou dans des zones de traitement distinctes, chacune de ces zones comportant un adsorbant. Une telle zone de traitement peut par exemple consister en un réacteur.

Cependant pour certaines applications, de l'azote liquide substantiellement exempt en l'une ou deux seulement desdites impuretés peut convenir. Un adsorbant sélectif en cette impureté peut alors être mis en oeuvre seul.

L'élimination des impuretés peut être réalisée au contact de l'adsorbant par chimisorption et/ou physisorption.

La température de l'azote liquide à purifier est strictement inférieure à son point d'ébullition .Cette température peut être comprise entre -196°C et -150°C alors que la pression de l'azote liquide à purifier peut être comprise entre 1,5 et 25 bar, de préférence entre 3 et 15 bar. Bien entendu, la température et la pression sont choisies de sorte que l'azote soit liquide, et non pas gazeux.

La vitesse linéaire de l'azote liquide au travers de l'adsorbant peut être supérieure à 10⁻³ m/s ; de préférence elle est comprise entre 10⁻³ et 5.10⁻² m/s, plus préférentiellement comprise entre 3.10⁻³ et 1.10⁻² m/s.

Aux températures mises en oeuvre, les impuretés oxygène et monoxyde de carbone sont à l'état liquide.

Selon un aspect tout particulièrement préféré du procédé de l'invention, on effectue l'élimination des impuretés par adsorption en dehors de la boite froide dans laquelle l'azote liquide a été élaboré. Il a en effet été constaté par la demanderesse que l'adsorbant n'avait pas à être maintenu à une température basse, voire plus basse que celle de l'azote liquide, pour autoriser la préparation d'azote liquide de haute pureté.

Postérieurement à l'élimination des impuretés, l'adsorbant peut être régénéré de manière classique au moyen d'un flux d'un gaz de régénération. Ce gaz peut être passé au travers de l'adsorbant à co-courant ou, de préférence, à contre-courant de l'azote liquide à purifier. Habituellement, ledit gaz consiste en de l'azote gazeux ou un mélange d'azote gazeux et d'un gaz réducteur comme un hydrocarbure, ou de préférence l'hydrogène.

Un tel mélange peut contenir moins de 5 % en volume de gaz réducteur. L'azote gazeux mis en oeuvre peut être obtenu par vaporisation de l'azote liquide à purifier ou purifié. La température dudit gaz de régénération peut être comprise entre environ 2°C et 250°C. Quand l'adsorbant est une zéolite, cette température est de préférence voisine de la température ambiante (5 à 35°C). Quand l'adsorbant est un oxyde métallique poreux, cette température est de préférence comprise entre 150 et 250°C.

L'adsorbant peut être réparti en deux zones de traitement distinctes, montées en parallèle, l'une de ces zones étant régénérée pendant que l'autre est en contact avec l'azote liquide à purifier .

Préalablement à une première utilisation de l'adsorbant en vue de l'élimination desdites impuretés d'azote liquide, on peut activer l'adsorbant, notamment pour éliminer les traces d'eau qu'il contient.

Pour ce faire, on peut soumettre l'adsorbant à une température comprise entre 100°C et 500°C. Quand l'adsorbant est une zéolite, l'activation peut être réalisée à une température de l'ordre de 400°C, avantageusement sous balayage d'azote.

Quand l'adsorbant est un oxyde métallique poreux tel une hopcalite, l'activation peut être réalisée à une température comprise entre 150°C et 300°C, de préférence de l'ordre de 250°C, avantageusement sous balayage d'une atmosphère constituée d'azote et d'hydrogène et/ou de monoxyde de carbone.

Selon un autre aspect, l'invention consiste en un dispositif pour la mise en oeuvre du procédé décrit ci-dessus. Un tel dispositif comprend une source d'azote liquide à purifier comprenant l'une au moins des impuretés hydrogène, monoxyde de carbone et oxygène, reliée par une conduite à l'entrée d'au moins un réacteur, chaque réacteur comprenant au moins un susdit adsorbant permettant l'élimination de l'une ou plusieurs desdites impuretés, la sortie du réacteur étant munie d'une conduite de raccordement.

Selon un aspect tout particulièrement avantageux de l'invention, ledit dispositif comprend une source d'azote liquide disposée en dehors de la boîte froide dans laquelle est élaboré l'azote liquide à purifier.

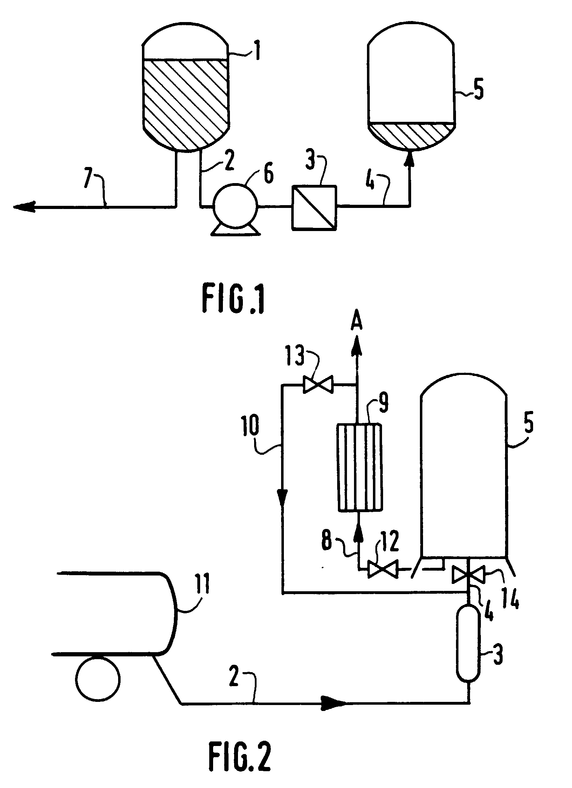

La figure 1 représente un dispositif selon l'invention, comprenant une source d'azote liquide à purifier 1, consistant en une cuve de stockage fixe d'azote liquide. Celle-ci est reliée par une conduite 2, munie d'une pompe 6, à l'entrée d'un réacteur 3 comprenant au moins un adsorbant permettant l'élimination de l'une ou plusieurs desdites impuretés.

La sortie du réacteur 3 est munie d'une conduite 4 de raccordement débouchant dans une cuve de stockage 5 d'azote liquide purifié.

La source d'azote liquide 1 est également munie d'une conduite 7 pour l'amenée d'azote impur vers son lieu d'utilisation (non représenté).

Le dispositif représenté à la figure 1 permet, donc de fournir de l'azote liquide purifié ou non purifié, à la demande et selon les besoins de l'utilisateur.

Le dispositif selon la figure 1 ne rajoute qu'un réacteur 3 et des moyens de liaisons 2 et 4, à une installation déjà implantée chez un utilisateur d'azote. Ledit dispositif peut donc être facilement mis en place chez ce dernier.

La figure 2 représente un dispositif selon l'invention comportant une source d'azote liquide à purifier consistant en une cuve de stockage d'azote liquide mobile 11, telle une cuve d'un camion.

Celle-ci est reliée par une conduite 2 à l'entrée d'un réacteur 3 comprenant au moins un adsorbant permettant l'élimination de l'une ou plusieurs desdites impuretés, la sortie dudit réacteur étant munie d'une conduite de raccordement 4, munie d'une vanne 14, débouchant dans une cuve de stockage d'azote liquide purifié 5.

Cette dernière est reliée par une conduite 8, munie d'une vanne 12, à un évaporateur 9 lui-même relié par une conduite 10, munie d'une vanne 13, à ladite conduite de raccordement 4.

Le dispositif représenté sur la figure 2 permet de purifier l'azote liquide sortant de la cuve 11 immédiatement avant son stockage dans la cuve de stockage 5.

En vue du remplissage de la cuve de stockage 5 par de l'azote purifié par mise au contact d'azote impur avec l'adsorbant contenu dans le réacteur 3, on ouvre la vanne 14 et on ferme les vannes 12 et 13. A la fin d'une opération de remplissage, on retire la conduite 2 de l'entrée du réacteur 3, on ferme la vanne 14 et on ouvre les vannes 12 et 13. De l'azote liquide de la cuve de stockage et conduit dans l'évaporateur 9 pour former de l'azote gazeux conduit par les conduites 10 et 4 dans le réacteur 3. On crée un courant d'azote gazeux, balayant l'adsorbant contenu dans le réacteur, permettant ainsi sa régénération.

Le dispositif selon la figure 2 permet aussi de fournir à un poste d'utilisation, de l'azote gazeux de haute pureté. A cette fin, on ferme les vannes 13 et 14, et on ouvre la vanne 12. L'azote liquide est conduit dans l'évaporateur 9 et l'azote gazeux de haute pureté formé est conduit vers son lieu d'utilisation dans la direction de la flèche A.

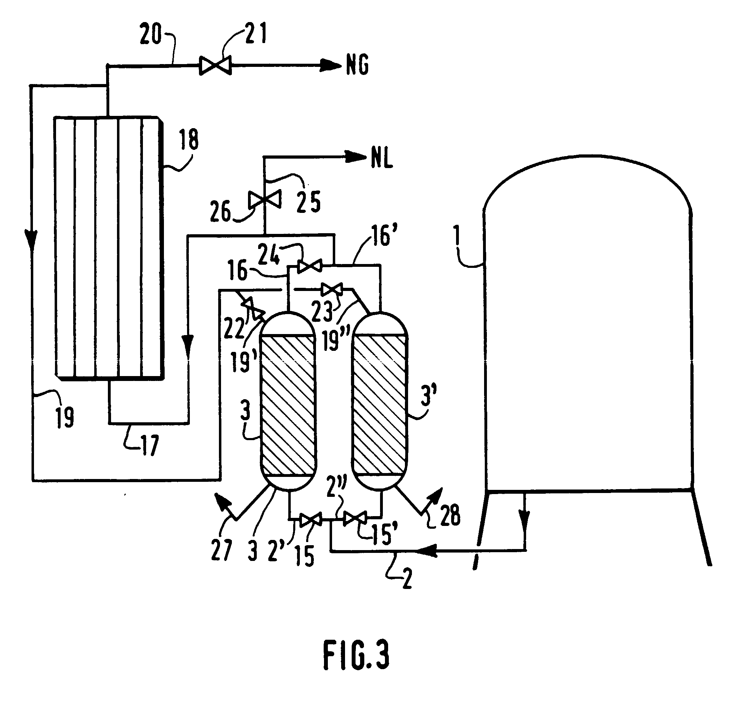

Le dispositif représenté à la figure 3 comprend deux réacteurs 3 et 3', montés en parallèle reliés à une cuve de stockage fixe 1 par une conduite 2, se ramifiant en deux branches 2' et 2''. La branche 2' est munie d'une vanne 15 et la branche 2'' est munie d'une vanne 15'. Chaque réacteur 3 et 3' est pourvu d'une conduite de purge, respectivement 27 et 28. La sortie de chaque réacteur 3 et 3' est équipée d'une conduite, respectivement, 16 et 16', débouchant chacune dans une conduite 17, relié à l'entrée d'un évaporateur 18. La conduite 16 est pourvue d'une conduite de dérivation 25 munie d'une vanne 26.

La sortie de l'évaporateur 18 est équipée d'une conduite 19 se ramifiant en deux branches 19' et 19'' débouchant à l'entrée de chaque réacteur, respectivement 3 et 3'. Chacune desdites baranches 19' et 19" est munie d'une vanne, respectivement 22 et 23. La conduite 19 comprend une conduite de dérivation 20 munie d'une vanne 21.

En fonctionnement, l'un des réacteurs 3 et 3' est mis en oeuvre pour la purification d'azote impur, tandis que l'autre est régénéré.

Quand le réacteur 3 est en régénération, les vannes 15, 21, 23 et 24 sont fermées et les vannes 15', 22 et 26 sont ouvertes. L'azote liquide est conduit de la cuve de stockage fixe 1 dans le réacteur 3', d'où il sort purifié. Une fraction de l'azote liquide purifié est conduite par les conduites 16' et 25 vers son lieu d'utilisation (non représenté). Une autre fraction de l'azote liquide purifié est amené par l'intermédiaire des conduites 16' et 17 dans l'évaporateur 18.

L'azote gazeux formé dans l'évaporateur 18 est conduit par les conduites 19, puis 19' dans le réacteur 3, de sorte à créer un courant de balayage à contre-courant, qui permet de régénérer l'adsorbant. L'azote gazeux est évacué du réacteur 3 par la conduite de purge 27. Quand l'adsorbant du réacteur 3 est régénéré, celui-ci peut être à son tour utilisé pour la purification d'azote liquide, alors que l'adsorbant du réacteur 3' est régénéré. Pour ce faire, on ferme les vannes 15', 21, et 22 et on ouvre les vannes 15, 23, 24 et 26.

Lorsqu'en plus de l'azote liquide de haute pureté, l'utilisateur souhaite mettre en oeuvre de l'azote gazeux de haute pureté, on ouvre la vanne 21. De l'azote gazeux est alors conduit par la conduite 20 vers son lieu d'utilisation (non représenté).

La vanne 21 peut être ouverte, en fonction de la demande, aussi bien quand c'est l'adsorbant du réacteur 3 ou celui du réacteur 3' qui est régénéré.

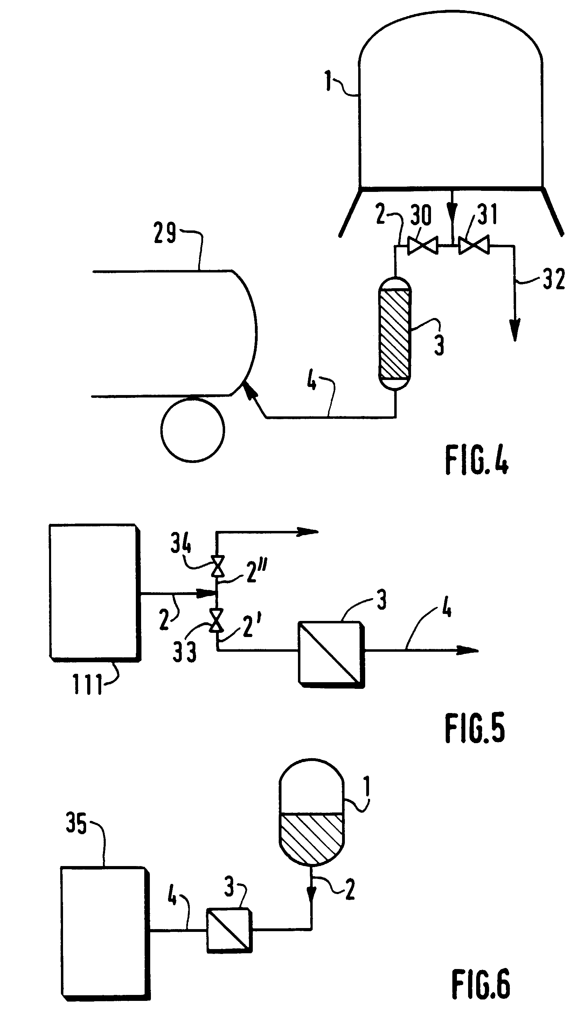

Le dispositif représenté à la figure 4 comporte une cuve de stockage fixe 1 d'azote liquide à purifier, reliée par une conduite 2, munie d'une vanne 30, à l'entrée d'un réacteur 3 comportant un adsorbant tel que défini ci-dessus. La sortie de ce réacteur est reliée par une conduite 4 à une cuve de stockage mobile 29 d'azote liquide purifié. La conduite 2 est pourvue d'une conduite de dérivation 32, munie d'une vanne 31.

En vue du remplissage de la cuve de stockage mobile 29, on ouvre la vanne 30. L'azote liquide impur est amené de la cuve de stockage 1 par la conduite 2 dans le réacteur 3.

L'azote liquide purifié est alors amené du réacteur 3 dans la cuve mobile 29.

La vanne 31 peut être ouverte ou fermée. Lorsqu'elle est ouverte, simultanément au remplissage de la cuve 29, on peut remplir une autre cuve mobile ou fixe (non représentée) par de l'azote liquide impur.

Le dispositif de la figure 5 représente une boîte froide 111 dans laquelle est élaboré de l'azote liquide comportant les impuretés monoxyde de carbone, hydrogène et oxygène. La boîte froide 111 est munie d'une conduite 2 se ramifiant en deux conduites 2' et 2'' munies chacune d'une vanne, respectivement 33 et 34. La conduite 2' débouche à l'entrée d'un réacteur 3 muni d'un adsorbant permettant l'élimination de l'une au moins desdites impuretés. La sortie dudit réacteur 3 est munie d'une conduite de raccordement 4.

Selon que la vanne électrovanne 33 ou 34 est ouverte, il est possible de produire de l'azote de haute pureté ou de l'azote comportant lesdites impuretés, à la demande, directement à la sortie de la boîte froide 111.

La figure 6 représente une unité de séparation des gaz de l'air fonctionnant avec un biberonnage d'azote liquide de haute pureté. Ce dispositif comporte une source d'azote liquide à purifier 1 reliée par une conduite 2 à l'entrée d'un réacteur 3 comportant un adsorbant pour éliminer les impuretés monoxyde de carbone, hydrogène et oxygène. La sortie du réacteur 3 est munie d'une conduite de raccordement 4 débouchant dans une boîte froide 35. Celle-ci peut notamment comporter une colonne de distillation APSA.

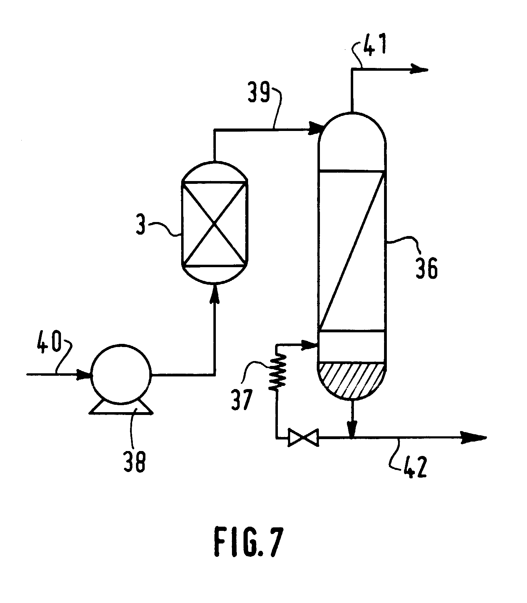

La figure 7 représente un dispositif selon l'invention associant un réacteur 3 rempli d'un adsorbant, tel une hopcalite présentant une sélectivité plus grande vis à vis de l'oxygène et du monoxyde de carbone que de l'hydrogène, à une colonne de distillation 36, pour séparer l'hydrogène de l'azote liquide. La colonne 36 est reliée au réacteur 3 par une conduite 39. La colonne de distillation 36 est également pourvue d'un rebouilleur 37, permettant de vaporiser une fraction d'azote liquide soutiré au pied de ladite colonne.

En fonctionnement, de l'azote liquide à purifier est conduit, par une conduite 40, si nécessaire au moyen d'une pompe 38, dans le réacteur 3.

Les impuretés monoxyde de carbone et oxygène sont adsorbés par l'adsorbant remplissant ledit réacteur 3. A sa sortie du réacteur 3, l'azote liquide est conduit par la conduite 30, dans la partie haute de la colonne de distillation. L'azote liquide récupéré à la sortie de ladite colonne est conduit dans une cuve de stockage ou vers un poste d'utilisation (non représentés) par la conduite 42.

Une fraction de l'azote liquide est récupéré en sortie de colonne, passe dans le rebouilleur 37 pour former de l'azote gazeux, injecté dans la partie basse de ladite colonne, à contre courant de l'azote liquide, afin d'assurer un débit de gaz ascendant nécessaire à la distillation hydrogène/azote. L'hydrogène est évacué dans le sens de la flèche 41.

Les exemples ci-dessous ont pour but d'illustrer la présente invention. Ils ont été réalisés en mettant en oeuvre le dispositif selon l'invention représenté à la figure 1. Le réacteur utilisé présentait un diamètre de 32 mm et une hauteur de 500 mm.

Les impuretés hydrogène et monoxyde de carbone ont été mesurées, toutes les deux minutes, au moyen d'un chromatographe RGA 3 commercialisé par la société Trace Analytical. L'impureté d'oxygène a été mesurée en continu au moyen d'un analyseur OSK, commercialisé par la société OSAKA SANSO KOGYO Ltd. Le seuil de détection du chromatographe RGA 3 est, pour l'hydrogène, de moins de 10 ppb ; il est de 2 ppb pour le monoxyde de carbone. Le seuil de détection de l'analyseur OSK est de 2ppb pour l'oxygène.

### EXEMPLE 1

On remplit le réacteur avec une zéolite 5A commercialisée par la société BAYER. Ces zéolites se présentent sous la forme de billes dont le diamètre est compris entre 1,6 mm et 3,5 mm. La zéolite est activée par traitement à 400°C sous azote gazeux pendant 10 heures.

L'azote liquide à purifier comprenait :
- hydrogène : 50 ppb
- monoxyde de carbone : 700 ppb.
- oxygène : 150 ppb.

La température de l'azote liquide était de -170° C et sa pression de 10 bar.

Le réacteur était parfaitement isolé pour maintenir cette température constante.

On a mesuré les teneurs en impuretés contenues dans l'azote liquide à sa sortie du réacteur, pendant 30 minutes.

Pendant cette période, on a détecté 30 ppb de monoxyde de carbone ; l'hydrogène n'a pas été détecté.

La teneur en oxygène de l'azote liquide traité était supérieure à 120 ppb.

On peut constater qu'une zéolite A non échangée, ne permet qu'une élimination partielle du monoxyde de carbone. En revanche, cet adsorbant permet une bonne élimination de l'hydrogène.

### EXEMPLE 2

On prépare une zéolite 5A échangée au cuivre en procédant à deux échanges successifs réalisés chacun de la manière suivante :

Dans un ballon de 4 litres surmonté d'un réfrigérant, on introduit 500 g de zéolites selon l'exemple 1, puis 2 litres d'une solution de CuCl₂ molaire, que l'on porte à 60° pendant 2 heures.

On filtre et on lave jusqu'à neutralité à l'eau déminéralisée ; puis on sèche une nuit à 80°C.

La zéolite obtenue est échangée au cuivre avec un taux d'échange voisin de 100%.

Cette zéolite est activée par balayage d'azote gazeux à 400°C.

Puis on met au contact de cette zéolite de l'azote liquide présentant les caractéristiques indiquées dans l'exemple 1.

Des mesures ont été effectuées pendant 60 minutes sur l'azote liquide purifié obtenu à la sortie du réacteur.

L'hydrogène et le monoxyde de carbone n'ont pu être détectés. La teneur en oxygène était supérieure à 120 ppb.

### EXEMPLE 3

On échange 350 g de zéolites Y, se présentant sous forme de billes de 1,6 à 3,5 mm de diamètre au moyen d'une solution de 91g de nitrate d'argent dans 735 ml d'eau distillée. Le taux d'échange est égal à 80 %. La zéolite Y ainsi préparée est placée dans le réacteur. On active la zéolite dans la façon indiquée dans l'exemple 1.

On met la zéolite Y échangée à l'argent au contact d'azote liquide présentant les caractéristiques indiquées dans l'exemple 1. Des mesures ont été effectuées pendant 30 minutes sur l'azote liquide recueilli à la sortie du réacteur. L'azote liquide présentait des teneurs en hydrogène et en monoxyde de carbone non détectée et une teneur en oxygène de 125 ppb.

### EXEMPLE 4

On dispose 500 g de mordénite se présentant sous la forme de bâtonnets dans un ballon de 1 litre surmonté d'un réfrigérant et placé dans une enceinte thermostatée à 60°C. Puis on introduit dans le ballon 250 ml d'une solution de nitrate d'argent obtenue par mise en solution de 133 g de nitrate d'argent dans de l'eau distillée.

On laisse réagir pendant 3 heures. Après refroidissement la zéolite est filtrée sur verre fritté et rincée par de l'eau distillée jusqu'à ce que le pH du dernier filtrat de lavage soit neutre. On sèche l'échantillon à l'étuve, une nuit à 80°C.

La zéolite est activée sous une atmosphère d'azote en balayage continu, pendant 2 heures à 450°C. On dispose alors la zéolite dans le réacteur et on la met au contact avec de l'azote liquide à purifier comprenant 200 ppb d'oxygène, 50 ppb d'hydrogène et 700 ppb de monoxyde de carbone.

L'azote liquide est à 10 bar et à une température de -170°C.

L'azote liquide est conduit au travers du réacteur, recueilli à sa sortie et les impuretés sont mesurées pendant 60 minutes. L'azote liquide contenait 125 ppb d'oxygène et des teneurs en hydrogène et en monoxyde de carbone non détectables.

### EXEMPLE 5

On dispose dans le réacteur une hopcalite commercialisée par la société PROLABO qui présente les caractéristiques suivantes :
- granulométrie à 3,3 mm
- densité apparente 1,2
- composition :
   . MnO₂ % 57 . Cu₂O et CuO % 13 . MnCO₃% 30

L'hopcalite est disposée dans le réacteur après avoir été activée avec un mélange gazeux comportant 95 % d'azote et 5% d'hydrogène (en volume), à 250°C.

L'azote liquide traité est identique à celui de l'exemple 4.

Les teneurs en impuretés de l'azote liquide sortant du réacteur sont mesurées pendant 60 minutes. Il a été constaté que l'hydrogène n'était pas éliminé et que les teneurs en monoxyde de carbone et oxygène n'étaient pas détectées.

## Revendications

1. Procédé de préparation d'azote liquide de haute pureté, substantiellement exempt en l'une au moins des impuretés hydrogène (H₂), monoxyde de carbone (CO) et oxygène (O₂), comportant la mise en contact de l'azote liquide à purifier avec un adsorbant permettant l'adsorption de l'une au moins desdites impuretés, pour la mise en oeuvre d'au moins une étape d'adsorption choisie dans le groupe formé par:
- une étape d'adsorption de l'impureté CO sur un adsorbant choisi dans le groupe formé par les zéolites naturelles échangées ou synthétiques échangées, et les oxydes métalliques poreux;
- une étape d'adsorption de l'impureté 02 sur un adsorbant choisi dans le groupe formé par les zéolites naturelles ou synthétiques, et les oxydes métalliques poreux;
- une étape d'adsorption de l'impureté H2 sur un adsorbant choisi dans le groupe formé par les zéolites naturelles ou synthétiques;
et la récupération de l'azote liquide ainsi purifié;
un procédé selon lequel l'impureté est le monoxyde de carbone et l'adsorbant une zéolite non échangée, étant exclus.

2. Procédé selon la revendication 1, caractérisé en ce que la zéolite est une mordénite ou une zéolite synthétique telle une zéolite A, X ou Y, de préférence une zéolite 4A, 5A, 10X ou 13X.

3. Procédé selon la revendication 2, caractérisé en ce que la zéolite est échangée par au moins un ion d'un métal choisi dans le groupe constitué par le lithium, un métal alcalino-terreux tel le calcium, le baryum ou le strontium, un métal de transition tel le zinc, le fer, l'argent ou, de préférence le cuivre.

4. Procédé selon la revendication 3, caractérisé en ce que la zéolite est échangée par un ion cuivrique.

5. Procédé selon la revendication 1, caractérisé en ce que l'oxyde métallique poreux comprend au moins un oxyde d'un métal de transition.

6. Procédé selon la revendication 5, caractérisé en ce que ledit oxyde métallique poreux comprend un oxyde mixte de cuivre et de manganèse, tel une hopcalite.

7. Procédé selon l'une des revendications 1 à 6, caractérisé en ce que l'adsorbant présente un diamètre de pore moyen supérieur ou égal à 0,4 nm, de préférence compris entre 0,5 et 1 nm.

8. Procédé selon l'une des revendications 1 à 7, caractérisé en ce que l'impureté consiste essentiellement en le monoxyde de carbone et l'oxygène.

9. Procédé selon l'une des revendications 1 à 8, caractérisé en ce que l'adsorption de l'impureté est réalisée en dehors de la boîte froide dans laquelle l'azote liquide a été élaboré.

10. Procédé selon l'une des revendications 1 à 9, caractérisé en ce que postérieurement à l'adsorption de l'impureté , on régénère l'adsorbant.

11. Procédé selon l'une des revendications 1 à 10, caractérisé en ce que l'adsorbant est réparti en deux zones de traitement distinctes montées en parallèles, l'une de ces zones étant régénérée pendant que l'autre est en contact avec l'azote liquide à purifier.

12. Procédé selon l'une des revendications 1 à 11, caractérisé en ce que l'azote liquide à purifier est à une pression comprise entre 1,5 bar et 25 bar, de préférence 3 bar et 15 bar.

13. Procédé selon l'une des revendications 1 à 12, caractérisé en ce que l'azote liquide à purifier présente une vitesse linéaire supérieure au travers de l'adsorbant supérieure à 10⁻³ m/s, de préférence comprise entre 10⁻³ et 5.10⁻² m/s.

14. Dispositif pour la mise en oeuvre du procédé selon l'une des revendications 1 à 13, caractérisé en ce qu'il comporte une source d'azote liquide à purifier (1, 11, 111) comprenant l'une au moins des impuretés hydrogène, monoxyde de carbone, et oxygène, reliée par une conduite (2) à l'entrée d'au moins un réacteur (3, 3'), chaque réacteur comprenant au moins un susdit adsorbant permettant l'élimination de l'une ou plusieurs desdites impuretés, la sortie du réacteur étant munie d'une conduite de raccordement (4, 16, 16').

15. Dispositif selon la revendication 14, caractérisé en ce que ladite source d'azote liquide à purifier (1, 11, 111) est disposée en dehors de la boîte froide dans laquelle est élaborée l'azote liquide à purifier.

16. Dispositif selon l'une des revendications 14 ou 15, caractérisé en ce que ladite source d'azote liquide (1,11, 111) consiste en une cuve de stockage d'azote liquide, mobile (11) ou fixe (1), ou une boîte froide (111).

17. Dispositif selon l'une des revendications 14 à 16, caractérisé en ce que ladite conduite (4, 16, 16') est raccordée à une cuve de stockage d'azote liquide purifié, mobile (29) ou fixe (5) ou à un appareil de production d'azote fonctionnant avec un biberonnage d'azote liquide (35).

18. Dispositif selon l'une des revendications 14 à 17, caractérisé en ce que ladite source d'azote liquide à purifier est reliée à deux réacteurs (3, 3') comprenant ledit adsorbant, lesdits réacteurs étant montés en parallèles.

19. Dispositif selon l'une des revendications 14 ou 15, caractérisé en ce que le réacteur (3,3') est relié à une colonne de distillation (36) pour la séparation d'hydrogène de l'azote liquide.

## Patentansprüche

1. Verfahren zur Herstellung von hochreinem, flüssigem Stickstoff, der im wesentlichen frei von mindestens einer der Verunreinigungen Wasserstoff (H₂), Kohlenmonoxid (CO) und Sauerstoff (O₂) ist, umfassend das Inkontaktbringen von flüssigem, zu reinigendem Stickstoffmit einem die Adsorption von mindestens einer der genannten Verunreinigungen gewährleistenden Adsorber zur Durchführung mindestens eines Adsorptionsschritts aus der Gruppe
- Schritt zur Adsorption der Verunreinigung CO auf einem aus der aus den natürlichen oder synthetischen, ausgetauschten Zeolithen oder den porösen Metalloxiden gebildeten Gruppe ausgewählten Adsorber;
- Schritt zur Adsorption der Verunreinigung O₂ auf einem aus der aus den natürlichen oder synthetischen Zeolithen oder den porösen Metalloxiden gebildeten Gruppe ausgewählten Adsorber;
- Schritt zur Adsorption der Verunreinigung H₂ auf einem aus der aus den natürlichen oder synthetischen Zeolithen gebildeten Gruppe ausgewählten Adsorber; und die Gewinnung des so gereinigten, flüssigen Stickstoffs,
wobei ein Verfahren, bei dem die Verunreinigung Kohlenmonoxid und der Adsorber ein nicht ausgetauschter Zeolith ist, ausgeschlossen ist.

2. Verfahren nach Anspruch 1, dadurch gekennzeichnet, daß der Zeolith ein Mordenit oder ein synthetischer Zeolith wie ein Zeolith A, X oder Y, vorzugsweise ein Zeolith 4A, 5A, 10X oder 13X ist.

3. Verfahren nach Anspruch 2, dadurch gekennzeichnet, daß in den Zeolith ein aus der aus Lithium, den Erdalkalimetallen wie Calcium, Barium oder Strontium, den Übergangsmetallen wie Zink, Eisen, Silber oder vorzugsweise Kupfer bestehenden Gruppe ausgewähltes Metallion als Austauschion eingebaut ist.

4. Verfahren nach Anspruch 3, dadurch gekennzeichnet, daß in den Zeolith ein Kupferion als Austauschion eingebaut ist.

5. Verfahren nach Anspruch 1, dadurch gekennzeichnet, daß das poröse Metalloxid mindestens ein Oxid eines Übergangmetalls umfaßt.

6. Verfahren nach Anspruch 5, dadurch gekennzeichnet, daß das poröse Metalloxid ein Kupferoxid/Manganoxid-Gemisch wie Hopkalit umfaßt.

7. Verfahren nach einem der Ansprüche 1 bis 6, dadurch gekennzeichnet, daß der Adsorber einen mittleren Porendurchmesser größer oder gleich 0.4 nm, vorzugsweise zwischen 0.5 und 1 nm aufweist.

8. Verfahren nach einem der Ansprüche 1 bis 7, dadurch gekennzeichnet, daß die Verunreinigung im wesentlichen Kohlenmonoxid und Sauerstoff ist.

9. Verfahren nach einem der Ansprüche 1 bis 8, dadurch gekennzeichnet, daß die Adsorption der Verunreinigung außerhalb des Kühlgefäßes, in dem der flüssige Stickstoff hergestellt wurde, stattfindet.

10. Verfahren nach einem der Ansprüche 1 bis 9, dadurch gekennzeichnet, daß der Adsorber nach der Adsorption der Verunreinigung regeneriert wird.

11. Verfahren nach einem der Ansprüche 1 bis 10, dadurch gekennzeichnet, daß der Adsorber in zwei parallel angeordnete Bereiche zur unerschiedlichen Behandlung unterteilt ist, wobei der eine Bereich regeneriert wird, während der andere in Kontakt mit dem zu reinigendem, flüssigen Stickstoff steht.

12. Verfahren nach einem der Ansprüche 1 bis 11, dadurch gekennzeichnet, daß der zu reinigende, flüssige Stickstoff unter einem Druck zwischen 1.5 und 25, vorzugsweise zwischen 3 und 15 bar steht.

13. Verfahren nach einem der Ansprüche 1 bis 12, dadurch gekennzeichnet, daß der zu reinigende, flüssige Stickstoff mit einer oberen, linearen Geschwindigkeit von mehr als 10⁻³ m/s, vorzugsweise mit 10⁻³ bis 5x10⁻² m/s durch den Adsorber fließt.

14. Vorrichtung zur Durchführung eines Verfahrens nach einem der Ansprüche 1 bis 13, dadurch gekennzeichnet, daß sie eine über eine Leitung (2) mit dem Einlaß mindestens eines Reaktors (3, 3') verbundene Quelle für zu reinigenden, flüssigen Stickstoff (1, 11, 111) hat, der mindestens eine der Verunreinigungen Wasserstoff, Kohlenmonoxid und Sauerstoff aufweist, wobei jeder Reaktor mindestens einen der oben genannten Adsorber zur Entfernung mindestens einer der besagten Verunreinigungen aufweist und der Reaktorauslaß mit einer Verbindungs!eitung (4, 16, 16') ausgestattet ist.

15. Vorrichtung nach Anspruch 14, dadurch gekennzeichnet, daß die Quelle für flüssigen, zu reinigenden Stickstoff (1, 11, 111) außerhalb des Kühlgehäuses, in dem der zu reinigende, flüssige Stickstoffhergestellt wird, angeordnet ist.

16. Vorrichtung nach Anspruch 14 oder 15, dadurch gekennzeichnet, daß die Quelle für flüssigen, zu reinigenden Stickstoff (1, 11, 111) aus einem festen (1) oder mobilen (11) Speicherbehälter für flüssigen Stickstoff oder einem Kühlbehälter (111) besteht.

17. Vorrichtung nach einem der Ansprüche 14 bis 16, dadurch gekennzeichnet, daß die Leitung (4, 16, 16') mit einem festen (5) oder mobilen (29) Speicherbehälter für gereinigten, flüssigen Stickstoff oder einer mit einer Speisung durch flüssigen Stickstoff (35) betriebenen Anordnung zur Stickstoffproduktion verbunden ist.

18. Vorrichtung nach einem der Ansprüche 14 bis 17, dadurch gekennzeichnet, daß die Quelle für zu reinigenden, flüssigen Stickstoff mit zwei den Adsorber umfassenden Reaktoren (3, 3') verbunden ist, wobei die Reaktoren parallel angeordnet sind.

19. Vorrichtung nach Anspruch 14 oder 15, dadurch gekennzeichnet, daß der Reaktor (3, 3') mit einer Destillationssäule (36) zur Abscheidung von Wasserstoff von flüssigem Stickstoffverbunden ist.

## Claims

1. Process for preparing high purity liquid nitrogen, substantially free from at least one of the impurities hydrogen (H₂), carbon monoxide (CO) and oxygen (O₂), comprising putting the liquid nitrogen to be purified into contact with an adsorbent which can adsorb at least one of the said impurities, for the operation of at least one adsorption stage selected from the group consisting of :
- a stage for the adsorption of the impurity CO on an adsorbent selected from the group formed of natural exchanged zeolites or synthetic exchanged zeolites, and porous metal oxides;
- a stage for the adsorption of the impurity O₂ on an adsorbent selected from the group formed of natural or synthetic zeolites, and porous metal oxides;
- a stage for the adsorption of the impurity H₂ on an adsorbent selected from the group formed of natural or synthetic zeolites;
and the recovery of the liquid nitrogen purified in this way;
to the exclusion of a process according to which the impurity is carbon monoxide and the adsorbent is non-exchanged zeolite.

2. Process according to claim 1, characterized in that the zeolite is a mordenite or a synthetic zeolite such as an A, X or Y zeolite, preferably a 4A, 5A, 10X or 13X zeolite.

3. Process according to claim 2, characterized in that the zeolite is exchanged by at least one ion of a metal selected from the group consisting of lithium, an alkaline earth metal such as calcium, barium or strontium, a transition metal such as zinc, iron, silver or preferably copper.

4. Process according to claim 3, characterized in that the zeolite is exchanged by a copper ion.

5. Process according to claim 1, characterized in that the porous metal oxide comprises at least one transition metal oxide.

6. Process according to claim 5, characterized in that the said porous metal oxide comprises a mixed oxide of copper and manganese, such as hopcalite.

7. Process according to one of claims 1 to 6 characterized in that the adsorbent has a mean pore diameter greater than or equal to 0.4 nm, preferably between 0.5 and 1 nm.

8. Process according to one of claims 1 to 7, characterized in that the impurity consists essentially of carbon monoxide and oxygen.

9. Process according to one of claims 1 to 8, characterized in that the impurity is adsorbed outside the cold box in which the liquid nitrogen has been produced.

10. Process according to one of claims 1 to 9, characterized in that the adsorbent is regenerated following adsorption of the impurity.

11. Process according to one of claims 1 to 10, characterized in that the adsorbent is distributed in two distinct treatment zones mounted in parallel, one of these zones being regenerated while the other is in contact with the liquid nitrogen to be purified.

12. Process according to one of claims 1 to 11 characterized in that the liquid nitrogen to be purified is at a pressure of between 1.5 bar and 25 bar, preferably between 3 bar and 15 bar.

13. Process according to one of claims 1 to 12 characterized in that the liquid nitrogen to be purified has an upper linear velocity through the adsorbent greater than 10⁻³ m/s, preferably between 10⁻³ and 5.10⁻² m/s.

14. Device for putting the process according to one of claims 1 to 13 into practice, characterized in that it comprises a source of liquid nitrogen to be purified (1,11,111) comprising at least one of the impurities hydrogen, carbon monoxide and oxygen connected by a pipe (2) to the inlet of at least one reactor (3,3'), each reactor comprising at least one of the above mentioned adsorbents enabling one or more of the said impurities to be eliminated, the outlet from the reactor being provided with a connecting pipe (4,16,16').

15. Device according to claim 14, characterized in that the said source of liquid nitrogen to be purified (1,11,111) is situated outside the cold box in which the nitrogen to be purified is produced.

16. Device according to one of claims 14 or 15, characterized in that the said source of liquid nitrogen (1,11,111) consists of a movable (11) or fixed (1) storage vessel for liquid nitrogen, or a cold box (111).

17. Device according to one of claims 14 to 16, characterized in that the said pipe (4,16,16') is connected to a movable (29) or fixed (5) storage vessel for purified liquid nitrogen or to an apparatus for producing nitrogen operating with a continuous feed of liquid nitrogen (35).

18. Device according to one of claims 14 to 17, characterized in that the said source of liquid nitrogen to be purified is connected to two reactors (3,3') comprising the said adsorbent, the said reactors being mounted in parallel.

19. Device according to one of claims 14 or 15, characterized in that the reactor (3,3') is connected to a distillation column (36) for separating hydrogen from liquid nitrogen.
